(19) **Europäisches Patentamt / European Patent Office / Office européen des brevets**

(11) **EP 1 577 646 B2**

(12) # NEW EUROPEAN PATENT SPECIFICATION
### After opposition procedure

(45) Date of publication and mention
of the opposition decision:
**25.07.2018 Bulletin 2018/30**

(45) Mention of the grant of the patent:
**12.11.2014 Bulletin 2014/46**

(21) Application number: **04380060.6**

(22) Date of filing: **17.03.2004**

(51) Int Cl.:
***G01D 5/36*** *(2006.01)*

(54) **Optical encoder**

Optische Positionsmesseinrichtung

Codeur optique

(84) Designated Contracting States:
**AT BE BG CH CY CZ DE DK EE ES FI FR GB GR HU IE IT LI LU MC NL PL PT RO SE SI SK TR**

(43) Date of publication of application:
**21.09.2005 Bulletin 2005/38**

(73) Proprietor: **FAGOR, S.COOP.**
**20500 Mondragon (Guipuzcoa) (ES)**

(72) Inventor: **Morlanes Calvo, Tomas**
**1011 Vitoria-Gasteiz (Alava) (ES)**

(74) Representative: **Igartua, Ismael et al**
**Galbaian S.Coop.**
**Polo de Innovación Garaia**
**Goiru Kalea 1 - P.O. Box 213**
**20500 Arrasate-Mondragón (Gipuzkoa) (ES)**

(56) References cited:
**WO-A1-02/01160        DE-A1- 19 638 912**
**US-A- 4 912 322        US-A- 5 113 693**
**US-B1- 6 492 637**

## Description

### TECHNICAL FIELD

The present invention relates to measuring devices by which the relative position of a first element and a second element is determined.

### PRIOR ART

Measuring devices are known for determining the relative position between a first element and a second element which are displaced in relation to one another, the first element being, for example, a bed of a processing machine and the second element being a slide piece which is displaced in relation to said bed. Said measuring devices comprise a graduated scale incorporated in a bracket fixed to the first element.

Measuring devices for absolute positions are known that comprise a graduated scale which has an absolute track and an incremental track. Each one of said tracks are formed by a succession of lines.

These measuring devices also comprise, incorporated in the second element, light emitting means which emit a light beam through said scale, light sensor means which receive said light beam through said scale, and processing means which receive, from the light sensor means, a signal representative of the light signal received by said light sensor means.

Measuring devices of absolute positions exist whose absolute track is formed from a pseudo random code, the processing means being able to determine the position of a moving element in relation to a fixed element at any time depending on the value of said code, i.e. depending on the sequence of lines of the absolute track that corresponds to each position. The processing means know said sequence of lines depending on the signal received by the light sensor means through the scale.

Particularly in this type of measuring devices, but also in other measuring devices based on the same optical principles, it is intended that the light signal received by the light sensor means is a light signal with areas of absence of light in the parts opposite track lines, and areas of light in the parts opposite areas of the track without lines, the edges between the areas of absence of light and the areas of light being as abrupt as possible, giving rise, in an ideal situation, to a square-shaped signal. Thus, the diffusion of the signal received through the scale is an undesirable effect, since, the greater the diffusion is, the more the signal received will differ from the ideal square shape signal.

To avoid the effect of light diffusion, it is necessary that the light sensor means emit a collimated light beam. For this, said light beam is transmitted through lenses or mirrors wherein the light emitted by a light source impinges.

US 6,492,637 B1 discloses a dimension measuring apparatus comprising a moving member adapted to move for dimension measurement, a grid device for moving with the moving member, an optical device for irradiating the grid device, a light receiving device for receiving the light radiated from the optical device and transmitted through the grid device and for generating a non-sinusoidal wave signal in accordance with the movement of the moving member, and a processing device for measuring the moving distance of the moving member based on the non-sinusoidal wave signal.

### DISCLOSURE OF THE INVENTION

The main object of the invention is to provide a measuring device for precisely determining the relative position between two elements.

The measuring device of the invention as defined in claim 1 comprises a graduated scale incorporated in the first element, said scale comprising at least one track with a plurality of lines, and also comprises, incorporated in the second element, light emitting means which emit a light beam to said scale, and light sensor means which receive, through the scale or reflected in said scale, a light signal which comprises areas of light intensity maximums, areas of light intensity minimums, and edges between said areas of light intensity maximums and said areas of light intensity minimums. It further comprises processing means which receive, from the light sensor means, a signal representative of the light signal received by said light sensor means.

The light beam emitted by the light emitting means has a diffusion which makes the signal received by the light sensor means have edges of a determined gradient, the processing means using, to calculate the relative position, a plurality of points on each one of said edges. The measuring device of the invention therefore uses, to determine the relative position, an effect that has been considered to be undesirable in the state of the art: the diffusion of the light beam emitted by the light emitting means.

In the measuring devices of the state of the art, the edges of the signal received by the light sensor means are very abrupt, the processing means knowing, at most, the light intensity at one point on each edge. Thus, the precision that the processing means may attain in measuring the relative position is limited by the fact that a single interpolation point is used on each edge.

In the measuring device of the invention, the processing means use a plurality of points of each edge, which means that the measuring of the relative position is more precise, since the processing means determine the relative position taking into account a plurality of interpolation points on each edge. Evidently, the greater the number of interpolation points used, the greater the precision obtained in the measurement.

Furthermore, in the measuring device of the invention, for transmitting the light beam, lenses and mirrors can be dispensed with, since it is not necessary to collimate said light beam. Dispensing with lenses and mirrors, in addition to the subsequent costs saving, manages to reduce the size of the light emitting means.

These and other advantages and features of the invention will become evident in the light of the drawings and the detailed description of the invention.

DESCRIPTION OF THE DRAWINGS

FIG. 1 is a diagrammatic view of an embodiment of the measuring device of the invention.

FIG. 2 shows a simplified diagrammatic view of a measuring device with an extensive light source, as well as the signal obtained in the sensor means.

FIG. 3 shows a simplified diagrammatic view of the embodiment of FIG. 1, as well as the signal obtained in the sensor means.

FIG. 4 shows a diagrammatic view of an embodiment of the invention which comprises an absolute track and an incremental track.

DETAILED DISCLOSURE OF THE INVENTION

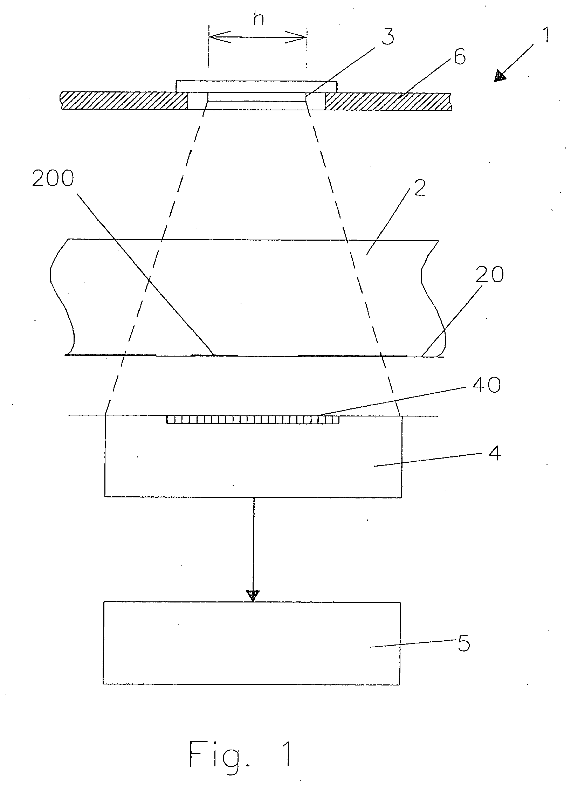

With reference to figure 1, the measuring device 1 of the invention comprises a graduated scale 2 incorporated in a first element, said scale 2 comprising at least one track 20 with a plurality of lines 200, and also comprises, incorporated in the second element:

- light emitting means 3 which emit a light beam through said scale 2, and
- light sensor means 4 which receive, through said scale 2, a light signal which comprises areas of light intensity maximums, areas of light intensity minimums, and edges between said areas of light intensity maximums and said areas of light intensity minimums.

The measuring device 1 of the invention comprises processing means 5 which receive, from the light sensor means 4, a signal representative of the light signal received by said light sensor means 4. The light emitting means 3 are positioned on a printed circuit board 6.

Although in the measuring device 1 illustrated in figure 1 the light signal reaches the light sensor means 4 through the scale 2, the embodiment of the measuring device 1 could be such that said light signal would reach the light sensor means 4 from the scale 2 by reflection.

The light beam emitted by the light emitting means 3 has a diffusion which makes the signal received by the light sensor means 4 have edges of a determined gradient. The processing means 5, which may be, for example, of DSP-type ("digital signal processor"), use a plurality of points on each one of said edges to calculate the relative position.

The light sensor means 4 comprise a sensor matrix 40 and are of the CCD-type ("coupled charge device") or similar. A typical sensor matrix 40 comprises a row of 1024 sensors or pixels with a pitch of $7.8\mu m$. In a measuring device with light sensor means 4 of these characteristics which uses a collimated light beam, the edges of the signal received in said light sensor means 4 are abrupt, which means that the processing means 5 receive, for each edge, the value of a single point, that corresponding to a single pixel. Thus, to measure the relative position with precision, the processing means 5 use a single interpolation point.

In the measuring device 1 of the invention, however, the edges are not abrupt, which means that to measure the relative position with precision, the processing means 5 use a plurality of interpolation points on each edge.

In a preferred embodiment, the light beam emitted by the light emitting means 3 has a diffusion which makes the signal received by the light sensor means 4 have a triangular shape, i.e. the edges are elongated so that a light signal with consecutive leading and trailing edges corresponds to an alternative succession of lines 200 and empty spaces in the track 20, without, between said leading edges and said trailing edges, there being areas of intensity maximums and areas of intensity minimums separating said edges.

The light emitting means 3 of the measuring device 1 of the invention can dispense with lenses and mirrors, since the light beam emitted by said light emitting means 3 does not have to be collimated. Thus, in the embodiment of figure 1, the light emitting means 3 comprise a light source of a determined width h, the light beam generated by said light source being the light beam that the light emitting means 3 emit.

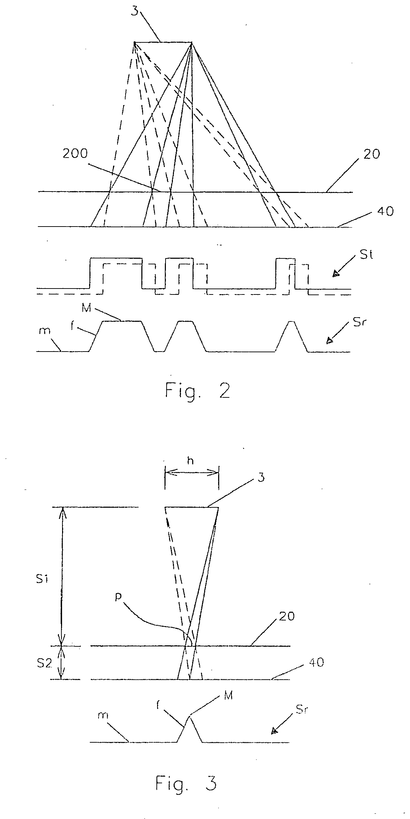

The light signal Sr received in the light sensor means 4 when the light beam is directly emitted from a light source of a determined width h is that shown in figure 2. The shape of said signal Sr can be deduced from the theoretic signals St that would be obtained for the end points of the light source. Said signal Sr has areas of light intensity maximums M, areas of light intensity minimums m, and edges f.

As indicated in figure 3, the track 20 has a determined basic pitch p, the light source of the light emitting means 3 is at a determined distance s1 from said track 20, and said track 20 is at a determined distance s2 from the light sensor means 4. The gradient of the edges f of the light signal received by the light sensor means 4 is determined in accordance with the ratio among the width h of the light source, the pitch p of the track 20 (or what is the same, the width p of the lines 200), distance s1 and distance s2.

According to the invention, the signal obtained in the sensor means 4 is a triangular signal. The ratio between widths h and p and distances s1 and s2 to obtain a signal of these characteristics is the following:

$$\frac{p}{s_2} = \frac{h}{s_1 + s_2}$$

With this distance ratio, as is shown in figure 3, a signal Sr is obtained wherein consecutive edges f appear. In this case, the intensity minimums correspond to points of absence of light.

The processing means 5 comprise calculation means through which the relevant position is determined from the intensity received in each one of the pixels of the sensor matrix 40. In the preferred embodiment of the invention, a resolution can be obtained in the calculation greater than that which would be obtained in an embodiment wherein the edges of the signal obtained in the sensor 4 were abrupt.

Using a sensor matrix 40 with 1024 pixels with a pitch of 7.8μm, and the lines 200 having a width p=80μm, in an embodiment wherein the edges were abrupt, we would have, given that the basic pitch p is 80μm and the pitch of the pixels is 7.8μm, that 10.26 pixels would correspond to each basic pitch p, which would give rise to, bearing in mind that the sensor matrix 40 comprises 1024 pixels, a maximum of approximately 100 pixels corresponding to edges of the light signal received. Given that the track 20 is typically an absolute track with a pseudo random code, there would be an average of approximately 50 pixels corresponding to edges. Bearing in mind that the basic pitch p is 80μm, the basic resolution of the system would be:

$$\frac{80}{50} = 1.60 \, \mu m$$

In the preferred embodiment of the invention, for an alternative sequence of ones and zeros, the values of the 1024 pixels would all correspond to points of the edges of the signal received in the sensor means 4. For a pseudo random code, we would have an average of 512 pixels corresponding to points on the edges, which would give the following basic resolution:

$$\frac{80}{512} = 0.16 \, \mu m$$

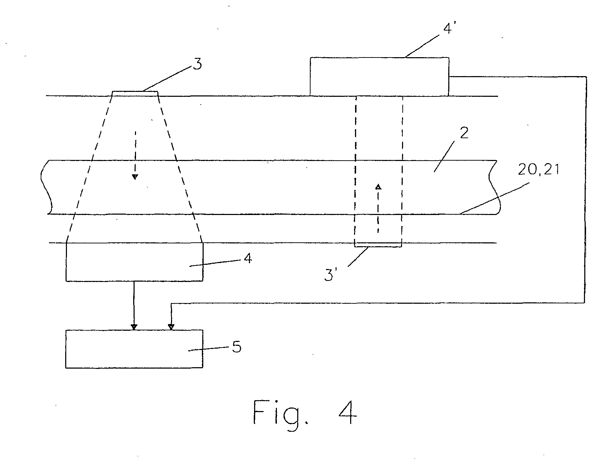

In the most typical embodiment of the measuring device 1 of the invention, represented in the figure 4, the track 20 is an absolute track and the scale 2 also comprises an incremental track 21. The measuring device 1 comprises second light emitting means 3' and second light sensor means 4' linked to said incremental track 21.

An advantageous arrangement of said second light emitting means 3' and of said second light sensor means 4' is that shown in figure 4. As is observed in said figure 4, the second light emitting means 3' are arranged on the side of the scale 2 where the light sensor means 4 are, and the second light sensor means 4' are on the side of the scale 2 where the light emitting means 3 are.

This arrangement has, in relation to the arrangements wherein the two light emitting means 3 and 3' are on one side of the scale 2 and the two light sensor means 4 and 4' are on the other side of the scale 2, the advantage that possible interference is avoided between the light beam of the light emitting means 3 and the light beam of the light emitting means 3'.

**Claims**

1. Measuring device for determining the relative position between a first element and a second element which are displaced one in relation to the other, which comprises a graduated scale (2) incorporated in the first element, said scale (2) comprising at least one absolute track (20) with a plurality of lines (200) with a predetermined width p, and which also comprises, incorporated in the second element, light emitting means (3) which emit a light beam to said scale (2), and light sensor means (4) comprising a sensor matrix (40) which receive, through the scale (2) or reflected in said scale (2), a light signal which comprises areas of light intensity maximums, areas of light intensity minimums, and edges between said areas of light intensity maximums and said areas of light intensity minimums, and the measuring device (1) further comprising processing means (5) which receive, from the light sensor means (4), a signal representative of the light signal received by said light sensor means (4), **characterized in that** the light beam emitted by the light emitting means (3) has a diffusion which makes the signal received by the light sensor means (4) have edges of a determined gradient instead of being a square-shaped signal, the processing means (5) using, instead of a single interpolation point, a plurality of interpolation points on each one of said edges to calculate the relative position,

the light emitting means (3) comprising a light source of a determined width h, the light beam emitted by the light emitting means (3) being the beam generated by said light source,

the light source of the light emitting means (3) being at a determined distance s1 from the track (20), and said track (20) being at a determined distance s2 from the light sensor means (4), the gradient of the edges of the light signal received by the light sensor means (4) depending on the ratio among the width h of the light source, the width p of the lines (200), the distance s1 and the distance s2,

the ratio between widths h and p and distances s1 and s2 being the following: $\dfrac{p}{s_2} = \dfrac{h}{s_1 + s_2}$ .

**2.** Measuring device according to claim 1, wherein the scale (2) also comprises an incremental track (21), the measuring device (1) comprising second light emitting means (3') and second light sensor means (4') linked to said incremental track (21), said second light emitting means (3') being on the side of the scale (2) where the light sensor means (4) are, and the second light sensor means (4') being on the side of the scale (2) where the light emitting means (3) are.


**Patentansprüche**

**1.** Messeinheit zum Ermitteln der relativen Position zwischen einem ersten Element und einem zweiten Element, die in Bezug auf einander versetzt sind, die eine in das erste Element integrierte graduierte Skala (2) umfasst, wobei die Skala (2) zumindest eine Absolutspur (20) mit einer Mehrzahl von Linien (200) mit einer vordefinierten Breite p umfasst, und die darüber hinaus ein in das zweite Element integriertes Lichtabgabemittel (3), das einen Lichtstrahl auf die Skala (2) abgibt, und ein Lichtsensormittel (4) umfasst, das eine Sensormatrix (40) umfasst, das ein Lichtsignal, das Bereiche mit Lichtintensitätsmaxima, Bereiche mit Lichtintensitätsminima und Flanken zwischen den Bereichen mit Lichtintensitätsmaxima und den Bereichen mit Lichtintensitätsminima umfasst, über die Skala (2) oder in der Skala (2) reflektiert empfängt, und wobei die Messeinheit (1) darüber hinaus ein Verarbeitungsmittel (5) umfasst, das ein Signal vom Lichtsensormittel (4) empfängt, das für das vom Lichtsensormittel (4) empfangene Lichtsignal repräsentativ ist, **dadurch gekennzeichnet, dass** der vom Lichtabgabemittel (3) abgegebene Lichtstrahl eine Streuung hat, durch die das vom Lichtsensormittel (4) empfangene Signal Flanken eines bestimmten Gradienten aufweist, anstatt ein viereckiges Signal zu sein, wobei das Verarbeitungsmittel (5) anstatt eines einzelnen Interpolationspunkts eine Mehrzahl von Interpolationspunkten auf jeder der Flanken verwendet, um die relative Position zu berechnen,
wobei das Lichtabgabemittel (3) eine Lichtquelle einer bestimmten Breite h umfasst, wobei der vom Lichtabgabemittel (3) abgegebene Lichtstrahl der von der Lichtquelle erzeugte Lichtstrahl ist,
wobei die Lichtquelle des Lichtabgabemittels (3) in einem bestimmten Abstand s1 zur Spur (20) liegt, und wobei die Spur (20) in einem bestimmten Abstand s2 zum Lichtsensormittel (4) liegt, wobei der Gradient der Flanken des vom Lichtsensormittel (4) empfangenen Lichtsignals vom Verhältnis zwischen der Breite h der Lichtquelle, der Breite p der Linien (200), dem Abstand s1 und dem Abstand s2 abhängt, wobei das Verhältnis zwischen den Breiten h und p und den Abständen s1 und s2 die folgenden

sind: $\dfrac{p}{s_2} = \dfrac{h}{s_1 + s_2}$.

**2.** Messeinheit nach Anspruch 1, wobei die Skala (2) darüber hinaus eine Inkrementalspur (21) umfasst, wobei die Messeinheit (1) ein zweites Lichtabgabemittel (3') und ein zweites Lichtsensormittel (4') umfasst, die mit der Inkrementalspur (21) verbunden sind, wobei das zweite Lichtabgabemittel (3') auf jener Seite der Skala (2) ist, auf der sich das Lichtsensormittel (4) befindet, und wobei das zweite Lichtsensormittel (4') auf jener Seite der Skala (2), auf der sich das Lichtabgabemittel (3) befindet.


**Revendications**

**1.** Dispositif de mesure pour déterminer la position relative entre un premier élément et un second élément qui sont déplacés l'un par rapport à l'autre, qui comprend une échelle graduée (2) incorporée dans le premier élément, ladite échelle (2) comprenant au moins une trajectoire absolue (20) ayant une pluralité de lignes (200) ayant une largeur prédéterminée p, et qui comprend également, incorporés dans le second élément, des moyens émetteurs de lumière (3) qui émettent un faisceau lumineux vers ladite échelle (2), et des moyens capteurs de lumière (4) comprenant une matrice de capteur (40) qui reçoivent, à travers l'échelle (2) ou réfléchi dans ladite échelle (2), un signal lumineux qui comprend des zones de maximums d'intensité lumineuse, des zones de minimums d'intensité lumineuse et des fronts entre lesdites zones de maximums d'intensité lumineuse et lesdites zones de minimums d'intensité lumineuse, le dispositif de mesure (1) comprenant en outre des moyens de traitement (5) qui reçoivent, à partir des moyens capteurs de lumière (4), un signal représentatif du signal lumineux reçu par lesdits moyens capteurs de lumière (4), **caractérisé en ce que** le faisceau lumineux émis par les moyens émetteurs de lumière (3) présente une diffusion grâce à laquelle le signal reçu par les moyens capteurs de lumière (4) présente des fronts d'un gradient déterminé à la place d'être un signal de forme carrée, les moyens de traitement (5) utilisant, à la place d'un seul point d'interpolation, une pluralité de points d'interpolation sur chacun desdits bords pour calculer la position relative,
les moyens émetteurs de lumière (3) comprenant une source de lumière d'une largeur déterminée h, le faisceau lumineux émis par les moyens émetteurs de lumière (3) étant le faisceau généré par ladite source de lumière,
la source de lumière des moyens émetteurs de lumière (3) étant à une distance déterminée s1 de la piste (20), et ladite piste (20) étant à une distance déterminée s2 des moyens capteurs de lumière (4), le gradient des fronts du signal lumineux reçu par les moyens capteurs de lumière (4) dépendant du rapport entre la largeur h de la source de lumière, la largeur p des lignes (200), la distance s1 et la distance s2, le rapport entre les largeurs h et p et lest distances s1 et s2 étant le suivant : $\dfrac{p}{s_2} = \dfrac{h}{s_1 + s_2}$.

2. Dispositif de mesure selon la revendication 1, dans lequel l'échelle (2) comprend également une trajectoire incrémentielle (21), le dispositif de mesure (1) comprenant des seconds moyens émetteurs de lumière (3') et des seconds moyens capteurs de lumière (4') liés à ladite trajectoire incrémentielle (21), lesdits seconds moyens émetteurs de lumière (3') étant sur le côté de l'échelle (2) où se trouvent les moyens capteurs de lumière (4), et les seconds moyens capteurs de lumière (4') étant sur le côté de l'échelle (2) où se trouvent les moyens émetteurs de lumière (3).

Fig. 1

Fig. 2

Fig. 3

Fig. 4

**EP 1 577 646 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6492637 B1